## Europäisches Patentamt
## European Patent Office
## Office européen des brevets

(19)

(11) Publication number: **0 190 899**
**A2**

(12)

# EUROPEAN PATENT APPLICATION

(21) Application number: 86300686.2

(51) Int. Cl.⁴: **G 05 B 19/10**

(22) Date of filing: 31.01.86

(30) Priority: 01.02.85 GB 8502597

(43) Date of publication of application:
13.08.86 Bulletin 86/33

(84) Designated Contracting States:
DE FR GB IT

(71) Applicant: TURNRIGHT CONTROLS LIMITED
Walton Road
Farlington Portsmouth, PO6 1SX(GB)

(72) Inventor: Collie, Arthur Alexander
11 Bacon Lane
Hayling Island Hampshire, PO11 0DN(GB)

(72) Inventor: Billingsley, John
2 Queens's Place
Southsea Hants, PO5 3HF(GB)

(74) Representative: Pike, Harold John et al,
Abel & Imray Northumberland House 303-306 High
Holborn
London, WC1V 7LH(GB)

(54) Apparatus for recording and displaying control data.

(57) Electirical apparatus for recording and displaying control data in which control means operable to effect the recording of data representing a control variable for equipment controllable by the apparatus, when operated initally, effects the display of the recorded data associated with the control means and effects orderly alteration of the recorded data associated with the control means for constant continued operation of the control means.

EP 0 190 899 A2

./...

Croydon Printing Company Ltd.

FIG. 1

Apparatus for recording and displaying control data

The present invention relates to apparatus for recording and displaying control data for controlling the operation of equipment.

Apparatus for recording and displaying control data are used to effect the control of a wide range of equipment, including domestic equipment such as cookers and washing machines, which are required to operate for specific time durations, and possibly at specified temperatures.

Control data recording and display apparatus associated with cookers are, in effect, clocks, since their operation is related to the time of day, and clocks for controlling equipment usually include facilities for entering start times, finish times, duration of operation, and the like, of functions to be performed, the times for, or of, such functions being often referred to as variables. A cooker may also require data as to a desired operating temperature, which data may be recorded in the clock.

The present invention provides an electrical apparatus arranged to facilitate the entry of control data which may include time instants or time durations, for storage by the apparatus.

In accordance with the present invention, electrical apparatus for recording and displaying control data includes control means (the first control means) operable to effect the recording of data representing a control variable for equipment controllable by the apparatus, wherein initial operation of the control means effects the display of the recorded data associated with the control means, and constant continued operation of the control means effects orderly alteration of the recorded data associated with the control means.

Constant continued operation of the control means may effect incrementing of the recorded data and additional control means arranged to effect decrementing of the recorded data may be included. Constant continued operation of the control means may effect decrementing of the recorded data and additional control means arranged to effect incrementing of the recorded data may be included.

The electrical apparatus may be arranged to effect alteration of the recorded data at a first rate, for initial operation of the control means, and to effect alteration at a higher than the first rate for continued constant operation of the control means.

The electrical apparatus may be arranged to effect initial alteration of the units digit followed by alteration of one of the higher-than-units digits without alteration of any of the lower order digits.

The control variable may be time, and the electrical apparatus may be arranged to effect initial alteration in units up to 60 seconds followed by alteration of the higher order digits with the seconds digits remaining at 00.

The electrical apparatus may include a plurality of control means each associated with a particular control variable.

The control variables may include time instants and a time interval, and the electrical apparatus may be arranged to prevent such alteration of a control variable as would cause a recorded time instant to occur within the recorded time interval. The control variables may include the time instants "time of day" and "ready time" and the time interval ."cook time", and the electrical apparatus may be arranged to determine "start time" from "ready time" and" "cook time" and to prevent the entry of variables which would cause "time of day" to fall in the time interval "cook time" which is bounded by "start time" and "ready time."

Apparatus in accordance with the present invention, arranged to record and display data representing time variables will now be described by way of example only and with reference to the accompanying drawings, in which:-

Fig. 1 is a circuit diagram representation of a control clock including push button control switch means for effecting the recording of time variables, and

Fig. 2 is a circuit diagram representation of an alternative arrangement of the control clock of Fig. 1.

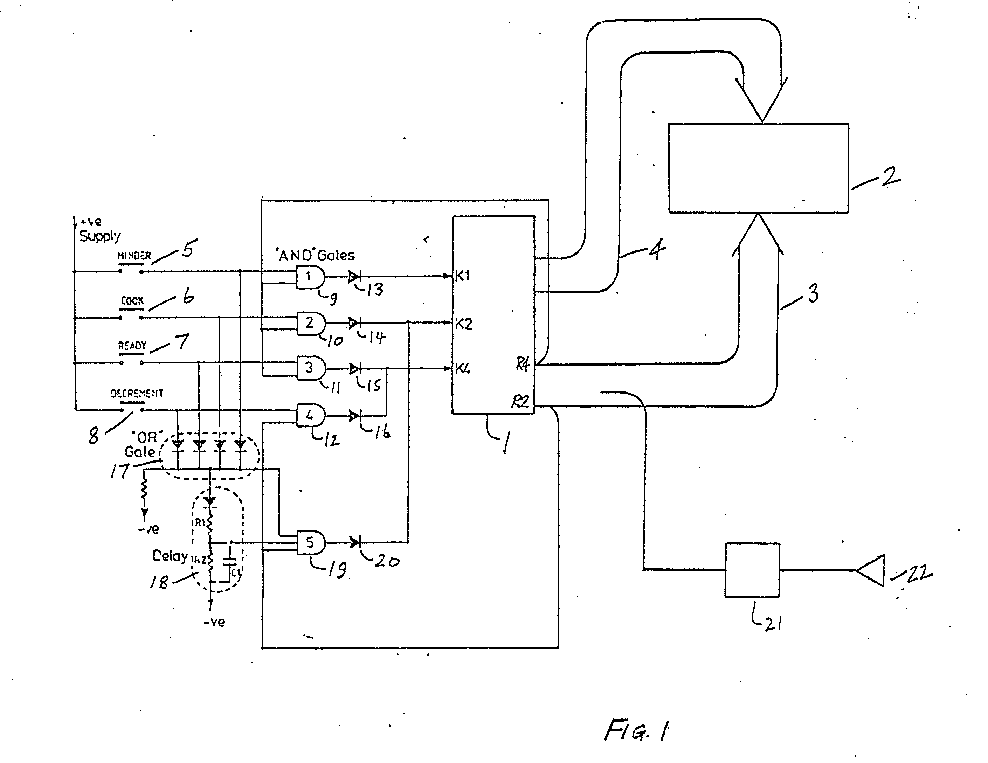

Referring to Fig. 1, a cooker control clock includes a microprocessor 1 connected to a multi-digit display 2 by way of bus connections 3 and 4, input control switches 5, 6, 7 and 8 effecting instruction entry to the K1, K2 and K2 input terminals of the microprocessor 1 by way of AND gates 9, 10, 11 and 12 and isolating diodes 13, 14, 15 and 16, a 4-input diode OR gate 17 effecting instruction entry to the K2 input terminal of the microprocessor 1 by way of a delay circuit 18 and an AND gate 19 and isolating diode 20, and an oscillator 21 and electro-acoustic transducer 22 connected to one of the R drive terminals of the microprocessor 1.

The microprocessor 1 is a type TMS 1070 integrated circuit, which is an electrical system made up of interconnected component blocks, including an arithmetic-logic unit, a control unit, fixed and alterable data storage elements, and data input and output ports. In the operation of the microprocessor 1, electrical pulses received at its input port give rise to the generation, within the microprocessor, of electrical signals representing the states of one or more of the alterable data storage elements, the presentation of the signals to the arithmetic-logic unit and their modification by the arithmetic-logic in accordance with the states of a selected group, or selected groups, of the fixed data storage elements, andthe application of the modified signals to one or more of the alterable data storage elements to cause the alterable data storage elements to assume states representing the modified signals. The modified signals, represented by the states of selected groups of alterable data storage elements, are passed repeatedly to the output port. All operations within the microprocessor 1 are regulated by the control unit which acts as a master clock, providing timing pulses at a plurality of locations for the purpose of maintaining ordered data flow as combinations of electrical states.

Timing and data pulses, provided by the microprocessor 1, are used to control the operation of the multi-digit display 2 by way of the bus connections 3 and 4, in known manner.

Timing pulses provided by the microprocessor 1 are used to signal commands to the microprocessor 1 by the time of their return to the input port represented by the locations Kl, K2 and K4 in Fig. 1 and according to which one of the locations Kl, K2 and K4 receives a pulse. The switches 5 to 8 and the components connected between the switches 5 to 8 and the input port of the microprocessor 1 represent the means for effecting commands to the microprocessor 1 by the return, to its input port, of its timing pulses provided on the locations R2 and R4 cf its output port.

Referring still to Fig. 1, cne input port of the AND gate 9 is energised periodically by pulses from the R4 location of the micrcprocessor 1, and closure of the switch 5 will result in a steady positive voltage being applied to the second input port of the AND gate 9, allowing the output pulses from the microprocessor 1 to be returned to the Kl location of its input port. The microprocessor 1 responds to the receipt of R4 pulses on its Kl input-port location by selecting, for display, data stored in alterable data storage associated with the function of the switch 5, the data representing a time period or time of day. Closure of the switch 5 also results in the connection of the steady positive voltage to the delay circuit 18 by means of the OR gate 17, and the connection of the steady positive voltage directly to one input port of the AND gate 19. Timing pulses from the R2 location of the micrprocessor 1 are applied to a second input port of the AND gate 19, and the AND gate 19 opens to pass the R2 pulses after a delay corresponding to that introduced by the delay circuit 18 by virtue of its connection to the third input port of the AND gate 19. The R2 pulses are received at the K2 input port location of the microprocessor 1 which responds by incrmenting the data stored in the alterable data storage associated with the function of the switch 5, thereby effecting a display of incrementing time of day or an incrementing time period, so long as the switch 5 remains closed. Also, opening of the switch 5 and reclosure before the delay circuit 18 becomes de-activated will result in the displayed value incrementing by one, and the operation may be performed repeatedly.

In the arrangement represented by Fig. 1, overshoot of the time of day or time duration, being set, is corrected by releasing the switch 5 and closing the switch 8 which is dedicated to the "decrement" function.  The microprocessor 1 is arranged to ignore the release of the switch 5 for one or two seconds in so far as operation of the switch 5 represents a command to display a particular function, that is, for a time after the release of the switch 5, the microprocessor 1 will continue to make available for display, the contents of the alterable data storage elements associated with the switch 5, but there will be no alteration of the contents during that time, and the closure of the "decrement" switch during that time will result in the decrementing of the contents of the alterable data storage elements associated with the switch 5 due to the supply of R2 pulses to the input port location K4 by way of the AND gate 12.  The closure of the "decrement" switch 8 also effects connection of the steady voltage to the delay circuit 18 which is thereby maintained in its active state so that subsequent release of the "decrement" switch 8 and re-closure of the switch 5 will result in incrementing of the relevant quantity without any delay.

The switches 6 and 7 are each associated with a variable (each different from the variable associated with the switch 5), and closure of either the switch 6, or the switch 7, will result in incrementing of the appropriate variable in the same manner as described for the variable associated with the switch 5.
The "decrement" switch 8 bears the same relationship
to the variables associated with the switches 6 and 7
as it does to the variable associated with the switch
5.

Referring still to Fig. 1, an oscillator 21 and
an electro-acoustic transducer 22 are included as
means for providing electro-acoustically simulated
"clicks" during the incrementing and decrementing
of the displayed values of the variables corresponding
to the switches 5, 6 and 7. Fixed data storage elements of the microprocessor 1 are so arranged that
the oscillator 21 is switched on for a few milliseconds
whenever a digit changes, causing the electroacoustic
transducer 22 to "blip" to provide a simulated "tick".
Since the "minutes" digits will change at a higher
rate than the "hours" digits, the "ticks" for the
minutes" digits will occur at one rate and for the
"hours" digits at a lower rate, for example, ten per
second for the "minutes" digits and two per second
for the "hours" digits. The switching on of the
oscillator 21 for a few milliseconds produces a burst
of oscillations from it and a sound like a clock
ticking. The duration of oscillator operation may be
longer at the changing of the "hours" digits, than at
that of the "minutes" digits, to provide a tick during "hours" adjustment that is louder than that produced for "minutes" adjustment.

The operations of incrementing and decrementing the variables represented by the switches 5, 6 and 7 may be performed by the microprocessor 1, thereby effecting the removal of substantially all of the components associated with the switches 5 to 8 in Fig. 1.

The steps carried out by the arithmetic-logic, control, and memory units, of the microprocessor, in effecting the incrementing and decrementing of the function values represented by the switches 5, 6 and 7 are as follows:

Step 1,     Display the variable indicated by FUNCTION
            SAVE.  Perform time-of-day incrementing
            and housekeeping as appropriate.

Step 2.     Input the button signals and decode into
            one of the following:  (a) None pressed,
            (b)  'Down' button, (c) Variable N.

Step 3.     If (FUNCTION SAVE = 0) and ('None pressed'
            or 'Down') then goto 1.

Step 4.     If not 'None pressed' then set DISPLAY:=15.

Step 5.     If 'None pressed' then subtract 1 from DISPLAY:
            if DISPLAY becomes 0 then set FUNCTION SAVE:
            = 0; goto 1.

Step 6.   If 'Variable N' and [ (FUNCTION SAVE = 0)
          or (FUNCTION SAVE is not equal to N)] then
          set FUNCTION SAVE: = N; set READY TO ADJUST:
          = 0; set PRESSED: = 1; goto 1.

Step 7.   If (READY TO ADJUST < 8) then add 1 to
          READY TO ADJUST; goto 1.

Step 8.   If 'None pressed' then set PRESSED: = 0;
          goto 1.

Step 9.   If (PRESSED = 0) and 'Variable N' then increment variable indicated by FUNCTION SAVE;
          set PRESSED: = 1; goto 1.

Step 10.  If (PRESSED = 0) and 'down' then decrement
          variable indication by FUNCTION SAVE; set
          PRESSED: = 1; goto 1.

Step 11.  If (PRESSED < 8) then add 1 to PRESSED; goto
          1.

Step 12.  If 'Variable N' then increment variable indicated by FUNCTION SAVE; goto 1.

Step 13.  If 'down' then decrement variable indication by FUNCTION SAVE; goto 1.

The operations performed by steps 5 and 7 may be
executed as part of a less frequently performed section
of the timekeeping, enabling a higher rate of final
incrementing to be achieved.  Step 7 then becomes:

If READY TO ADJUST < 8 then goto 1.

In this case, the criterion of step 11 may be increased

to 15.

Referring to the above Steps carried out by the microprocessor 1 in effecting the incrementing and decrementing of the functions represented by the switches 5, 6 and 7, at Step 1 the contents of a group of alterable data storage elements designated as FUNCTION SAVE is examined to determine which variable, if any, is to be displayed, the display device is supplied with the appropriate data and energised (if a value is to be displayed), and various other alterable data storage elements are altered as necessary to satisfy time and housekeeping functions (the system also keeps time of day as a 24-hour clock). At Step 2, the microprocessor 1 examines its input port to determine whether or not any of the switches 5 to 8 has been closed and assesses whether there has been no switch closure, the closure of the "decrement" switch 8, or the closure of one of the function switches 5, 6, or 7. If, as represented by Step 3, none of the function switches 5, 6 or 7 has been closed, or the decrement switch has been closed, and the FUNCTION SAVE check at Step 11 resulted in nothing being displayed, the microprocessor 1 returns to Step 1.

Still referring to the above Steps, the value of a group of alterable data storage elements, designed as DISPLAY, is set to 15 if one of the function switches 5, 6 or 7 was pressed (Step 4). Alternatively, at Step 5, 1 is subtracted from the current value of DISPLAY, the value of the contents of DISPLAY checked, FUNCTION SAVE is set to zero if DISPLAY is found to be zero, and the operation returns to Step 1. If Step 4 has been executed, then Step 6 is executed to change FUNCTION SAVE to the value N allocated to whichever of the switches 5, 6 or 7 has been closed, and further groups of alterable data storage elements designated by READY TO ADJUST and PRESSED are set to 0 and 1, respectively, and the operation returns to Step 1.

Still referring to the above Steps, continued closure of the same one of the function switches 5, 6 and 7 will result in the operation reaching Step 7 which effects the addition of 1 to READY TO ADJUST, whenever the READY TO ADJUST value is less than 8, and return to Step 1. If, however, the switch closed previously has been released, Step 8 is reached and PRESSED will be reset to 0 and the operation returns to Step 1.

Step 9, of the above Steps, effects the incrementing by units of a variable following the closure, for slightly more than two seconds, of the one of the switches 5, 6 and 7 associated with the variable, and Step 10 effects the decrementing by units of a variable following the closure and rapid release of one of the switches 5, 6 and 7 with the subsequent closure and release of the "decrement" switch.

Step 11, of the above Steps, effects the continued incrementing of PRESSED so long as any one of the function switches 5, 6, or 7, or the "decrement" switch 8 is held closed, the effect of PRESSED exceeding 8 being, that, at Step 12 incrementing is confined to a non-units digit, and, similarly, at Step 13, decrementing is confined to a non-units digit.

The operational steps set out above permit each function selection switch to have the second effect of enabling the displayed value to be adjusted.

The current value of the associated variable appears on the display when the chosen button is first pressed, and remains on display after the button is released for a time which may be two seconds. For the first second after the button is first pressed, no adjustment of the variable takes place. Thereafter each time the button is released and contact is remade, a single increment of the variable takes place provided that two seconds have not elapsed without contact thus causing the variable to be deselected. If after the first second has elapsed the button is held continuously for a time which may be again one second, repeated increments will be made to the variable until the button is released. These increments may be of one unit, or the increments may change during adjustment. After release of the button, changes by single increments per button press will again take place until the button has again been held continuously for one second.

The "decrement" button enables the variable to be adjusted in the opposite sense. The variable is first selected by pressing the selection button for a duration of less than one second. Pressing the "decrement" button then has a similar effect to the selection button in retaining the selection of the displayed variable, and causes the modification of the value to take place as before but in the opposite sense.

In practice, the arrangement is that, for continued operation of any one of the buttons, that is, the switches, changes occur initially in units up to 60 (seconds) and, thereafter, changes are confined to the higher order (hours) digits.

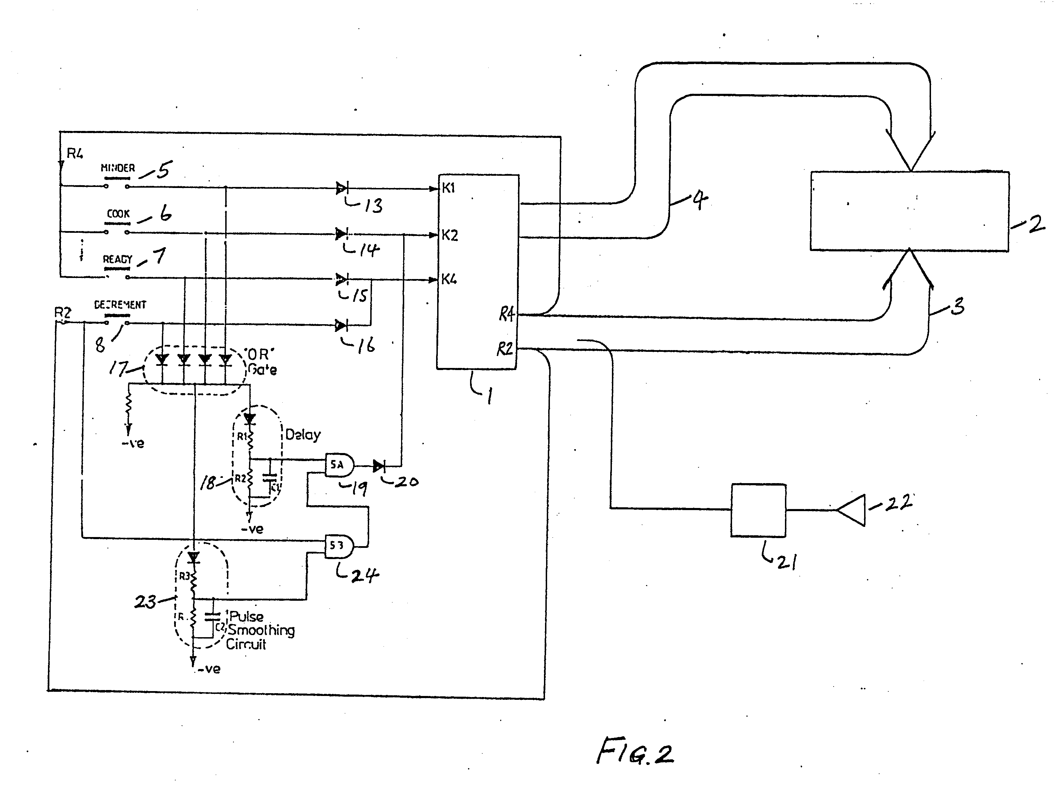

Referring now to Fig. 2, there is shown an alternative arrangement to that of Fig. 1 for performing the same function with the same microprocessor 1. The three function switches 5, 6 and 7, and the "decrement" switch 8 are energised by timing pulses from the R4 location of the microprocessor 1 and a delay circuit 23 is included to provide time overlap between the timing pulses from the R4 and R2 locations of the microprocessor 1. An AND gate 24, arranged to open the AND gate 19, controls the passage of the R2 pulses to the input port of the microprocessor 1 after a delay, as described above in respect of Fig. 1.

The functions of the components of Fig. 2 associated with the switches 5 to 8, may, as described above in respect of Fig. 1, be performed within the microprocessor 1.

The cooker control clock, described above, is arranged to perform the functions of a "minute minder" and a clock keeping the time of day, and to effect the entry into its data storage elements of "cook time" and "ready time", and is capable, given "cook time" and "ready time", of calculating "start time", the entry of the time instants and time durations being effected in the manner described above, that is, by push button control means which when pressed, cause the display of the current recorded value of a selected variable and which, when held pressed, effect ordered alteration of the selected value. The ordered alteration may be incrementing, or decrementing, and may occur in the units digits initially and, subsequently, in the non-units digits alone. For example, the "minutes" may increment initially in units up to 60, and thereafter, the "hours" will increment.

The control clock may be adapted for use in equipment, other than cookers, which require time data for operation, and may then provide control of additional variables, that is, non-time variables.

The microprocessor may be further arranged to test the effect, on recorded times, of each instruction by way of the push button control means to alter a selected variable before executing the instruction and to ignore the instruction if its execution would result in a recorded time instant falling within a recorded time duration.

UK Patent Specification GB 2 043 968, for example, discloses a microprocessor controlled timing apparatus in which the control variables include the time instants "time of day" and "ready time" and the time duration "cook time," each having its own memory location, and in which a further memory location is used to record the variable "start time" which is "ready time" minus "cook time." In such timing apparatus, it is unacceptable that "start time" should occur before "time of day" and such an error is prevented by the provision of a memory location in which the signed value of "start time" minus "time of day" is placed for each new instruction in advance of the execution of the instruction, the signed value of "start time" minus "time of day" being used to determine whether or not a new instruction should be obeyed, any new instruction which would lead to a negative value fro "start time" minus "time of day" (that is, "time of day" falling in the time interval "cook time" which is bounded by "start time" and "ready time") being ignored.

- 19 - 0190899

Claims:

1. Electrical apparatus for recording and displaying control data including control means (the first control means) operable to effect the recording of data representing a control variable for equipment controllable by the apparatus, wherein initial operation of the control means effects the display of the recorded data associated with the control means, and constant continued operation of the control means effects orderly alteration of the recorded data associated with the control means.

2. Electrical apparatus as claimed in claim 1, wherein constant continued operation of the control means effects incrementing of the recorded data and including additional control means arranged to effect decrementing of the recorded data.

3. Electrical apparatus as claimed in claim 1, wherein constant continued operation of the control means effects decrementing of the recorded data and including additional control means arranged to effect incrementing of the recorded data.

4. Electrical apparatus as claimed in any one of claims 1 to 3, arranged to effect alteration of the recorded data at a first rate, for initial operation of the control means, and to effect alteration at a higher than the first rate for continued

0190899

- 20 -

constant operation of the control means.

5. Electrical apparatus as claimed in claim 4, arranged to effect initial alteration of the units digit  followed by alteration of one of the higher-than-units digits without alteration of any of the lower order digits.

6. Electrical apparatus as claimed in claim 5, in which the control variable is time, arranged to effect initial alteration in units up to 60 seconds followed by alteration of the higher order digits with the records digits remaining at 00.

7. Electrical apparatus as claimed in any one of claims 1 to 6, including a plurality of control means each associated with a particular control variable.

8. Electrical apparatus as claimed in claim 7, in which the control variable include time instants and a time interval, arranged to prevent such alteration of a control variable as would cause a recorded time instant to occur within the recorded time interval.

9. Electrical apparatus as claimed in claim 8, in which the control variables include the time instants "time of day" and "ready time" and the time interval "cook time", arranged to determine "start time" from "ready time" and "cook time" and to prevent the entry of variables which would cause "time of day" to fall in the time interval "cook time" which is bounded by "start time" and "ready time."

0190899

FIG. 1

FIG.2